# EUROPEAN PATENT SPECIFICATION

(11) **EP 1 583 700 B1**
(45) Date of publication and mention of the grant of the patent: **28.09.2011**
(21) Application number: 04703025.9
(22) Date of filing: 16.01.2004
(51) Int. Cl.: B65D 33/00, C09J 7/02, B32B 27/00

(54) **SELECTIVELY ACTIVATABLE FOOD STORAGE WRAP SHEET**
SELEKTIVAKTIVIERBARE VERPACKUNGSFOLIE ZUR LEBENSMITTELLAGERUNG
FILM POUR ENVELOPPER DE LA NOURRITURE ACTIVABLE DE MANIERE SELECTIVE

(30) Priority: 16.01.2003 US 345540
(43) Date of publication of application: 12.10.2005
(73) Proprietor: THE PROCTER & GAMBLE COMPANY, Cincinnati, OH 45202 (US)
(72) Inventor: PALLOTTA, Shawn, Christopher, Maineville, Ohio 45039 (US); KINSEY, Von, Adoniram, Frazeyburg, OH 43822 (US); O'BRIEN, Michael, John, Blue Ash, Ohio 45241 (US); SALSMAN, Donald, Arthur, West Chester, Ohio 45069 (US); MCNEIL, Kevin, Benson, Loveland, Ohio 45040 (US)
(74) Representative: Clemo, Nicholas Graham
(86) International application number: PCT/US2004/001247
(87) International publication number: WO 2004/065239

(56) References cited:
- WO-A-02/42069
- WO-A-03/050197
- US-A- 3 554 835
- US-A- 5 948 493

## Description

### Field of Invention

The present invention relates to selectively activatable food storage wrap having an active disposable onto a target surface at the point of use. The selectively activatable sheet can be useful as a film sheet to form numerous items such as a food storage wrap.

### Background of the Invention

Sheet-like materials are known and used for the containment and protection of various items, particularly the preservation of perishable materials, such as food items. Such materials can be utilized to wrap items individually and/or can be utilized to form a closure for a semi-enclosed container. Particularly, food storage wraps can be used to cover bowls, dishes of leftovers, and to completely enclose food to be refrigerated, frozen, boiled, or otherwise stored or cooked.

One class of such materials comprises a polymeric composition formed into a thin, conformable web commonly supplied in a roll. Common examples of such materials are polypropylene (PP), polyvinylchloride (PVC), polyvinylidene chloride (PVDC), and polyethylene (PE) sheets. These materials can exhibit a clinging character on at least one surface due to the properties of the polymeric materials from which they are formed. Further, additives such as plasticizers and tackifiers can allow these materials to be folded, or wrapped around an item, and then cling to the item and/or itself. The clinging characteristics of these materials can also permit their use in combination with semi-enclosed rigid, semi-rigid, or flexible containers to provide a fully enclosed container structure. The barrier properties (i.e., oxygen, moisture/moisture vapor, and odor) of these materials can provide desired preservation characteristics for perishable items, such as food items and/or items that can oxidize, dehydrate, or otherwise degrade more rapidly due to continued exposure to an environment.

Even though these materials have achieved a certain level of acceptance, starting a dispensing operation is difficult with material supplied as a continuous roll in a dispensing carton. This is because locating and isolating the current end portion of the rolled web in order to start the dispensing operation is generally problematic. A number of methods to identify and/or isolate the current end of the rolled web has been developed. This includes providing tabs, colors, and end-grasping dispenser features. However the end of the rolled web is handled, the tendency of the material to cling to itself also increases the dispensing force required to unroll the web and tangentially separate the dispensed portion. If this force is excessive, a phenomenon known as "roll blocking" occurs. Roll blocking can cause these excessive dispensing forces to produce longitudinal tears in the web. This can lead to dispensing of a narrower, unevenly torn portion of the rolled web. Additionally, users frequently encounter situations where the material prematurely clings to itself (i.e., before contacting the desired bonding surface), necessitating either manual disengagement of the clinging portion(s) and/or discarding of the material in favor of a new portion.

In an attempt to overcome this problem, a release strip (also known in the art as a cover strip) was applied to the adhesive-coated face of the web. Prior to use, the release strip is removed and discarded. However, a release strip can add significant cost and complexity to the final product.

The use of release strips may be found in the art related to tape tabs for disposable diapers. Such tape tabs are small and must be manipulated during manufacturing to assure proper positioning for convenient use with an uncooperative baby during a diaper change. References to tape tabs can be found in the following U.S. patents: Milnamow, U.S.-Pat. No. 3,967,624; Kozak, U.S. Pat. No. 3,853,129; Nees, U.S. Pat. No. 4,067,337; Tritsch, U.S. Pat. No. 4,063,559; Tritsch, U.S. Pat. No. 4,010,753; and Kozak, U.S. Pat. No. 3,853,129.

Another difficulty with current food storage wraps is the failure of the material to form an adequate seal when folded from the outset or after a period of container or wrapped item handling. If a wrap cannot form a seal having barrier properties as least as good as those of the wrap itself, the full potential of the wrap for use as a storage wrap cannot be realized. Accordingly, some users undertake additional securement features, including rubber bands and tape. Wrinkles forming where the wrap meets itself or a target surface can leave channels in the region between the wrap and the opposing surface, causing a seal quality failure. Attempts to address seal quality shortcomings include double- or triple-wrapping the desired item to form a long seal path. However, this requires using excessive material.

An improved storage wrap material can be found in U.S. Pat No. 6,144,062, issued to Hamilton, et al. Other storage wrap materials are disclosed in Sanders, U.S. Pat. No. 5,334,693, and Groeger, U.S. Pat No. 5,948,493. )WO 02/42069 describes a wrap material having an active layer disposed between first and second lamina. At least one of the lamina is permeable to allow the active to be extended through it under pressure.

Additionally, because current storage wraps cannot only "cling" to themselves and other surfaces, their affinity for a complementary surface is highly dependent upon characteristics of the wrap, such as the chemical composition, electrical conductivity, surface energy, and surface finish. Thus, these wraps can be difficult to use and may form inadequate seals in order to preserve perishable food items. In numerous instances, the plasticizers, tackifiers, and other cling additives utilized to provide the cling properties of these wraps can introduce undesirable attributes, such as odor or environmental concerns to the finished wrap product.

Aluminum foil and coated (waxed) paper are another class of materials that comprise thin, conformable webs of various compositions commonly supplied in an individual sheet or a rolled form. These materials typically exhibit no adhesive or cling characteristic to a surface, instead relying upon the dead-fold characteristics of the material from which they are formed (i.e., they are folded or wrapped around an item to retain a folded or wrapped shape). The ability of these materials to maintain a folded or creased shape can facilitate their use in combination with semi-enclosed rigid, semi-rigid, or flexible containers to provide a fully enclosed however, non-air or lock-tight container structure. The barrier properties of such materials, particularly their oxygen, moisture/moisture vapor, and odor barrier properties provide unknown preservation characteristics for perishable items, such as food items and/or items which oxidize or otherwise degrade more rapidly with continued exposure to normal environmental conditions.

Therefore, it would be advantageous to provide a selectively activatable sheet material that can be supplied in a continuous roll or dispensing carton. Further, it would be advantageous for such a selectively activatable sheet material to have cling characteristics that facilitate its use in combination with semi-enclosed rigid, semi-rigid or flexible containers to provide a fully enclosed structure and provide superior barrier properties to extend the storage life of a food item.

### Summary of the Invention

The present invention is a food storage wrap comprising a selectively activatable sheet material. The selectively activatable sheet material comprises at least one lamina and an array of least one particulate deactivator material joined in face-to-face relationship, and an active material disposed between the at least one lamina and the at least one deactivator material. The at least one lamina comprises an essentially continuous network and the active is disposable beyond the lamina and/or deactivator material. The selectively activatable sheet material is releasably adherable to a target surface in response to the application of an external force to the selectively activatable sheet material. Additionally, the selectively activatable sheet material has a polypropylene surface peel force value ranging from 8.7 g/cm to 34 g/cm (22 g/inch to 86 g/inch), an active-to-active peel force ranging from 17 g/cm to 46 g/cm (43 g/inch to 117 g/inch) and a leak test value of at least 60 seconds.

The present invention also relates to a process for making a selectively activatable sheet material. The process comprises the steps of providing a first substrate having a first face, disposing an active upon the first face of the first substrate, and applying a particulate deactivator material in an array upon the active disposed upon the first face of the first substrate. Further, the active is disposable beyond the deactivator material in response to an application of an external force to the selectively activatable sheet material. Additionally, the selectively activatable sheet material has a polypropylene container peel force value ranging from 8,7 g/cm to 34 g/cm (22 g/inch to 86 g/inch), an active-to-active peel force ranging from 17g/cm to 46 g/cm (43 g/inch to 117 g/inch) and a leak test value of at least about 60 seconds.

### Brief Description of the Drawing

FIG. 1 is a fragmentary top plan view of an exemplary sheet shown in partial cutaway;
FIG. 2 is a cross-sectional view of FIG. 1 taken along line 2-2;
FIG. 2A is a cross-sectional view of an alternative embodiment of an exemplary sheet; and,
FIG.2B is a cross-sectional view of an alternative embodiment of an exemplary sheet.

### Detailed Description of the Invention

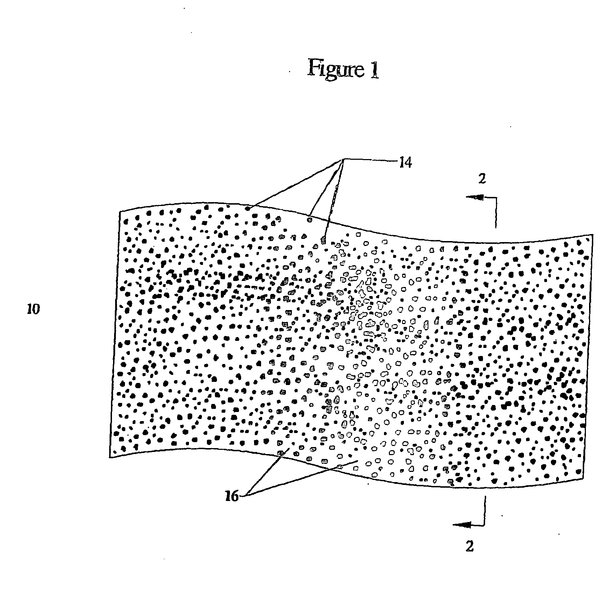

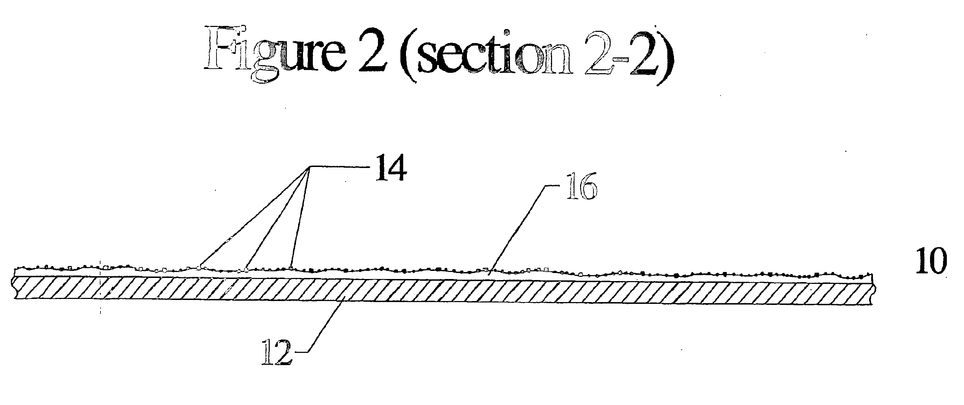

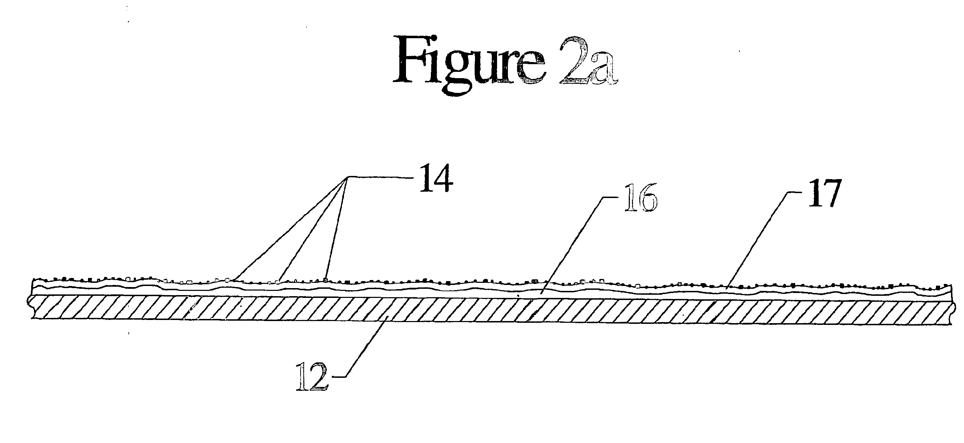

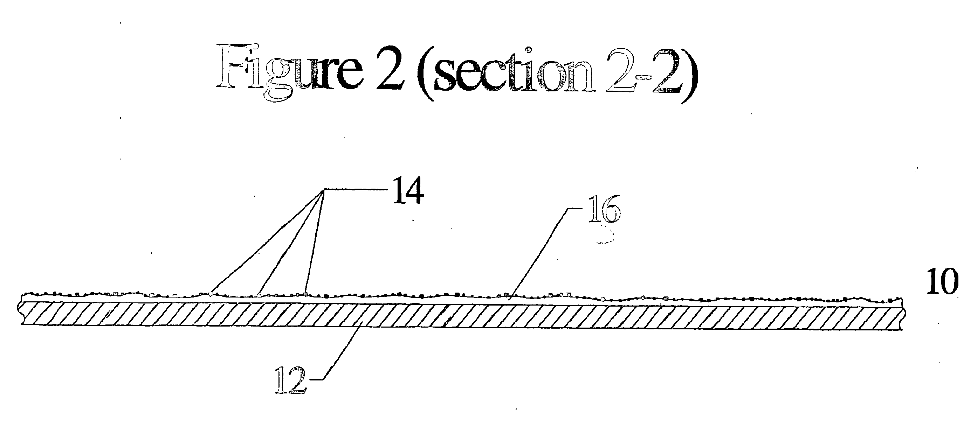

Referring to FIGS. 1 and 2, a selectively activatable sheet material 10 comprises at least one lamina (lamina) 12, an array of a deactivator material (deactivator) 14, and an intermediate active material (active) 16. Lamina 12 comprises an essentially continuous network. An "essentially continuous network" includes any geometric arrangement that provides an unbroken path that extends to the edges of the selectively activatable sheet material 10 in the MD and/or CD. An "essentially discontinuous network" includes any geometric arrangement that provides at least one broken path that extends to the edges of the selectively activatable sheet material 10 in the MD and/or CD. As shown in FIG. 1, an essentially continuous network can resemble a film sheet. An essentially continuous network can also provide lamina 12 as a solid, impermeable sheet, as well as a sheet material having discrete apertures therethrough.

Similarly, deactivator 14 can be discontinuous, continuous, essentially discontinuous, essentially continuous, and combinations thereof and active 16 can be discontinuous, continuous, essentially discontinuous, essentially continuous, and combinations thereof. Each of the lamina 12 and the deactivator 14 comprise opposed first and second faces and are related so that the first face of lamina 12 and the first face of deactivator 14 are joined in a face-to-face relationship. Thus, the first face of lamina 12 is oriented toward the corresponding first face of the deactivator 14 and can contact the corresponding first face of the deactivator 14, and vice-versa (i.e., deactivator 14 does not have to contact lamina 12 if active 16 is continuous.) The second faces of the lamina 12 and the deactivator 14 can be outwardly oriented. Both the selectively activatable sheet material 10 and the lamina 12 have a machine direction (MD), a cross-machine direction (CD) that is orthogonal and coplanar to the MD, and a Z-direction orthogonal to the MD/CD plane.

The active 16 can be any substance applied to, or integral with, the selectively activatable sheet material 10 that can also provide a functional benefit that is not obtainable from either the lamina 12 or deactivator 14 individually, or both lamina 12 and deactivator 14 taken together. In other words, the active 16 can be thought of as a substance that influences the properties of the selectively activatable sheet material 10 and delivers a benefit not strictly obtainable from only the lamina 12 or the deactivator 14. Active 16 can also influence a target surface to which the lamina 12 and deactivator 14 may be applied or placed in contact. One of skill in the art will recognize that a plurality of actives 16 may be used in accordance with the present invention.

The active 16 may be disposed upon, or otherwise associated with, the first surface of the lamina 12, the first face of deactivator 14, or both. Additionally, active 16 can be disposed upon, or otherwise associated with, the second face of the deactivator 14. One of ordinary skill will recognize that active 16 can be associated with the first face of either lamina 12 and/or deactivator 14, and optionally the same and/or a second active 17 may be associated with the second face of deactivator 14. Active 16 can be applied to lamina 12 and/or deactivator 14 in a continuous ordered pattern, a continuous random pattern, a discontinuous ordered pattern, a discontinuous random pattern, and combinations thereof in the MD, CD, or combinations thereof.

### Lamina

In a preferred embodiment, lamina 12 is of constant basis weight and density. Lamina 12 can comprise or include foil, polymer sheets, films, cloths, wovens or non-wovens, paper, cellulose fiber sheets, co-extrusions, laminates, and combinations thereof. A suitable lamina 12 can be made of a polymeric film. It has been found that a particularly suitable lamina 12 can be made of a polyolephinic film, such as HDPE, having a thickness of about 0.013 mm.

Further, lamina 12 is preferably deformable so that it is capable of movement in the CD, MD and/or Z-direction relative to deactivator 14. CD-MD deformation can be responsive to CD-MD stretching. Z-direction movements can be in response to compressive or sheer forces applied to the selectively activatable sheet material 10. Such movement preferably allows lamina 12 to deliver active 16 beyond the deactivator 14 onto a target surface. A selectively deformable material can include, but is not limited to, combinations, or degrees, of porosity, micro-porosity, gas permeability, liquid permeability, hydrophilicity, hydrophobicity, hydroscopicity, oleophilicity, high critical surface tension, pre-textured surfaces, plastic yieldability, electrical conductivity, and combinations thereof. It should be understood that transfer through lamina 12, deactivator 14, and the permeability or impermeability thereof, refers to properties relative to an active 16 disposed thereon.

If lamina 12 is breathable, it preferably has an open area of not more than about 10%, more preferably not more than about 15%, and most preferably not more than about 20%. For example, a breathable lamina 12 may be desirable when the intended end use of the selectively activatable sheet material 10 is a bandage or other application where the transmission of vapors may be appropriate. However, if contact with oxygen or other environmental substances is not preferred, selectively activatable sheet material 10 can utilize a solid or impermeable laminate 12 for sealing purposes.

### Deactivator

The deactivator 14 is a particulate. A particulate can extend entirely through the active 16 so that the active 16 disposed on the first surface of lamina 12, the first face of deactivator 14, or otherwise disposed between lamina 12 and deactivator 14 can be disposed, extruded, or otherwise transported, beyond the deactivator 14. Extrusion, or transport, beyond the deactivator 14 can bring active 16 proximate to the second surface of deactivator 14. When active 16 is proximate to the second surface of deactivator 14, active 16 may contact and act upon a target surface.

The deactivator 14 and lamina 12 can be deformable in the CD, MD, and/or Z- direction in response to an applied compressive or sheer force, as discussed *supra.* Deformation of the selectively activatable sheet material 10 can allow movement of one or more active 16 disposed intermediate within the selectively activatable sheet material 10 toward an outwardly oriented face of lamina 12 and/or deactivator 14. Deformation of lamina 12 and/or deactivator 14 can be elastic and be of sufficient duration to allow active 16 to contact a target surface. Alternatively, a preferred embodiment provides that deactivator 14 does not completely recover its initial thickness when an applied compressive force is removed, thereby rendering any deformation plastic and relatively permanent. In a preferred embodiment, a selectively activatable sheet material 10 adheres to a target surface upon application of a compressive force of about 70.3 kg/m² or less. Additionally, the deactivator 14 could be at least partially submersible with respect to active 16 so that active 16 can be exposed beyond the external surface of the deactivator 14.

The lamina 12, deactivator 14, and active 16 can have a first, second, and third thickness, respectively. In a preferred embodiment, it is believed that the thickness of active 16 should be greater than the thickness of the deactivator 14 prior to, and after, deformation. However, active 16 should still be capable of extrusion beyond the deactivator 14 to a target surface.

Exemplary, but non-limiting particulates, can be selected from the group consisting of clusters, powders, particles, prills, beads, or combinations thereof. Exemplary particulate shapes suitable for deactivator 14 can comprise spherical, elliptical, platelet-like, needle-like, or combinations thereof. Exemplary but non-limiting materials suitable for use as a deactivator 14 can be selected from the group consisting of potato starch, cornstarch, other starches, talc, silicon dioxide, titanium dioxide, zeolite, other minerals, polymers, glass, ceramic, and combinations thereof. Without desiring to be bound by theory, it is believed that the amount and size of these materials required for deactivator 14 will depend on the type, thickness, and tack of the individual active 16.

Suitable small particles can be suspended in a medium, such as water, and either sprayed or drawn onto the surface via a Meyer rod. Without desiring to be bound by theory, it is believed that if the resultant spray is not continuous, the sprayed particles will tend to dry into clusters or agglomerates. Further, if the particle-containing solution is drawn down or sprayed as a continuous film, the particles will tend to behave independently and resist the formation of large clusters. It is also believed that the particles can be applied electrostatically as either a powder or a solution, provided that the electrical properties are compatible with electrostatic spraying. It is believed that this will result in a uniform spacing between particles, as well as a uniform particle distribution. In this regard, if a metal grid or pattern is placed immediately behind a substrate, the particles will be attracted to it and result in a pattern of particles. The deactivator 12 can be applied in a uniform or non-uniform pattern, as required.

In an exemplary embodiment, lamina 12 would be provided with a thickness of at least about 0.5 mils (12,500 nm). A layer of active 16 in the form of an adhesive is applied to at least one face of lamina 12 wherein the adhesive is applied at a thickness ranging from about 5,000 nm to about 20,000 nm, and more preferably ranging from about 5,000 nm to about 8,000 nm. To prevent adhesion of the product prior to placement of the product onto a target surface, deactivator 14 can be applied to the exposed, outer surface of the active 16.

One approach is to use a deactivator 14 that has a particle size substantially smaller than the thickness of active 16. These particles preferably have a thickness ranging from at least about 1 nm to at least about 2,000 nm, more preferably ranging from at least about 1 nm to at least about 500 nm. A sufficient number of particles can be applied to prevent premature adhesion. In this regard, the particles can prevent premature contact between any material and the active 16 if the particles are disposed on top of the active 16. When adhesion to a target surface is desired, relatively low force can be applied to the lamina 12 in a direction perpendicular to the plane of lamina 12. This force can cause the deactivator 14 to move into the layer of active 16 until the outer face of the deactivator 14 is at or below the outer surface of the active 16. This movement of the deactivator 14 to a position essentially within the active 16 layer can thereby expose the outer surface of active 16 to the target surface and achieve the desired adhesion. The active 16 properties can also be provided so that the active 16 can flow around the deactivator 14 material after the deactivator 14 material has moved within the active 16 layer. This can provide improved performance and maximize the exposed surface area of active 16.

Alternatively, deactivator 14 can be supplied as a particle with sizes substantially greater than the thickness of active 16. In a preferred embodiment, deactivator 14, supplied as particles, can preferably have a thickness ranging from about 10,000 nm to about 200,000 nm and, more preferably, from about 10,000 nm to about 25,000 nm. A sufficient number of particles can be applied to prevent premature adhesion. In this example, the particles can prevent premature contact between any material and the active 16, since they are disposed on top of the active 16 and have an outer surface substantially higher than the outer surface of the active 16. When adhesion to a target surface is desired, relatively little force can be applied to the lamina 12 in a direction perpendicular to the plane of the lamina 12. This force can then cause the deactivator 14 to deform and/or move into the layer of active 16 until the deactivator 14 material adjoins the lamina 12 or is proximate to the lamina 12. In this preferred embodiment, since the thickness of deactivator 14 is substantially greater than the thickness of active 16, the outer surface of the deactivator 14 can still be significantly higher than the outer surface of the active 16 layer. However, the lamina 12 and active 16 should be sufficiently flexible to be deformed around the deactivator 14 material by the perpendicular force to a point where the outer surface of the active 16 contacts the target surface and the desired adhesion results.

In another embodiment, the deactivator 14 comprises fibers or fiber-like materials applied directly from an extrusion process. In this embodiment, the deactivator 14 can form a continuous, discontinuous, essentially continuous, essentially discontinuous, and/or a random pattern or network. The pattern can be regular and/or irregular.

Preferably, suitable fiber, or fiber-like materials, for use as a deactivator 14 are chosen from materials that can be formed into fiber-like forms. Exemplary but non-limiting materials include minerals, polymers, plant fibers, animal hair, and combinations thereof. Exemplary minerals can include glass and/or ceramics. Exemplary polymers include polyolefins, such as polyethylene homopolymers, polyethylene copolymers, polypropylene homopolymers, polypropylene copolymers, polymethylpentene homopolymers, polymethylpentene copolymers, polystyrene homopolymers, polystyrene copolymers, polyester homopolymers, polyester copolymers, polyamide homopolymers, polyamide copolymers, and combinations thereof. Polymers may include at least one release additive, such as a silicone oil, silicone surfactant, silicone homopolymer, silicone copolymer, fluorocarbon oil, fluorocarbon surfactant, fluorocarbon homopolymer, fluorocarbon copolymer (i.e., fluoro-acrylate homopolymer, fluoro-acrylate copolymer), and combinations thereof.

It has also been found useful to specify the fiber open area, strand diameter, and/or strand thickness of the ligaments of deactivator 14. The deactivator 14 preferably has an open area ranging from about 40% to about 95%, more preferably from about 60% to about 95%, and most preferably from about 80% to about 95%. It is believed that the open area of selectively activatable sheet material 10 should be maintained after the application forces allow deactivator 16 to contact or otherwise be affected by a target surface. The open area of a sheet material can be measured using standard image analysis techniques, as are known to those of skill in the art.

It is also believed that there is a proportional relationship between the open area of deactivator 14 and the thickness of deactivator 14. Without desiring to be bound by theory, it is believed that as the thickness of deactivator 14 increases, the open area of deactivator 14 should increase, in order to maintain sufficient open area for the active 16 to contact or otherwise influence a target surface after deformation. However, it is believed that there can be an inversely proportional relationship between the required thickness of the active 16 and the open area of the deactivator 14. As the thickness of the active 16 increases, it is believed that deactivator 14 may require less open area for the active 16 to contact or otherwise influence a target surface.

### Active

Suitable actives 16 can comprise antimicrobials, including virucides and bactericides, cleaning agents, perfumes, absorbents, adsorbents, adhesives, and combinations thereof. Preferably, active 16 is an adhesive; for-example, a pressure sensitive adhesive. However, any adhesive can be used to suit the needs of the material application. Suitable pressure sensitive adhesives are available from the ATO Findley Company of Wauwatosa, WI under the designations of Lox7110.02, HX-2630-08, and HX-5630-03. Further suitable adhesives are available from the H.B. Fuller Company of Vadnais Heights, MN under the designations of HL1711X, HL1711XZP, HL-2115X and NW1007XZP.

Exemplary pressure sensitive adhesives can include water based, water borne, solvent based, and/or hot melt adhesives. A preferred adhesive should have adequate force to hold the selectively activatable sheet material 10 to a target surface during use. However, an adhesive should not be so strong to require undue effort to remove the selectively activatable sheet material 10 from a target surface. Preferably, an adhesive does not leave a residue and is FDA approved for food grade applications. Adhesives can be refastenable, releasable, resealable, and/or permanent. Releaseable and resealable adhesives are preferred if multiple uses of the same selectively activatable sheet material 10 are intended. An adhesive can be cured thermally, using ultraviolet radiation, and/or with electron beam energy.

It is believed that the active 16 should have sufficient viscosity to withstand storage and shipment without undue migration from its position in the selectively activatable sheet material 10. An exemplary hot-melt adhesive suitable for use as active 16 should have a viscosity of about 750 mPa.s (centipoise) to about 3,00 mPa.s (centipoise) at 120°C if the selectively activatable sheet material 10 is intended for use in sealing food containers. An exemplary water-based adhesive suitable for use as active 16 could have a viscosity of about 25 mPa.s (centipoise) to about 100 mPa.s (centipoise) at 21°C. Of course, one of ordinary skill in the art will recognize that the amount of peel force can be increased or decreased, as necessary, for the selectively activatable sheet material 10 to perform its desired function. However, it is preferred that active 16 have a cohesive strength sufficient to minimize deposition of residue onto a target surface. It has been surprisingly found that treating lamina 12 with a corona discharge can reduce the amount of residue transferred to a target surface by a selectively activatable sheet material 10. In this regard, it was surprisingly found that a corona discharge treatment can increase the surface energy of lamina 12, thereby promoting preferential adhesion of active 16 to lamina 12 relative to a target surface. In a preferred embodiment, lamina 12 can be provided with a surface energy no greater than the range of about 34 dynes/cm to about 50 dynes/cm.

In another preferred embodiment, active 16 may inherently possess viscosity and/or flow characteristics that can permit liberation from its protected location within the selectively activatable sheet material 10 or may require viscosity modification to permit liberation and dispersal. Viscosity modification can be obtained by selecting an active 16 that can undergo a change in viscosity in response to the activation mode selected. By way of example, a mechanical activation, such as a compressive force, may employ actives 16 that are commonly referred to as "shear-thinning" (e.g., pseudoplastic or thixotropic). Examples of shear-thinning actives 16 include polymer solutions, many gels and pastes, such as dentifrice and body creams, paints, and gelled wood stains. Other materials may behave as shear-thinning materials only after a certain threshold sheer stress (yield stress) is reached or exceeded. Such materials are commonly referred to as "Bingham" plastic materials. An exemplary active 16 exhibiting such behavior is ketchup.

Properties that are believed to facilitate the dispensing of active 16 from the selectively activatable material 10 include the relative affinity of the active 16 for the target surface versus that for the laminate 12 and the deactivator 14. To a lesser extent, it is also preferred that the active 16 adhere to a target surface rather than to the selectively activatable sheet material 10 and/or portions of the active 16 itself. In other words, the active 16 should have a higher affinity for a target surface than for itself and/or the selectively activatable sheet material 10.

The combination of the active 16 and lamina 12 can exhibit certain physical properties that can enable the active 16 to be dispersed from within the three-dimensional structure of the selectively activatable sheet material 10 when applied to a target surface. Such dispersal can be partial, substantial, or complete. For example, if a selectively activatable sheet material 10 is used as a tamper evident seal, it may be preferable for portions of the active 16 to remain as residue upon the target surface. In another embodiment, if the selectively activatable sheet material 10 is to be used to dispense medication to the skin, active 16 preferably can be completely transferred to the target surface. An exemplary active 16 capable of remaining associated with the selectively activatable sheet material 10 is a layer of hot melt adhesive. If lamina 12 is permeable, the properties of active 16 can be sufficient to facilitate extension through the permeable material comprising lamina 12 so that active 16 can reach the second surface of lamina 12. Preferably, active 16 is applied to lamina 12 at a quantity ranging from about 1 g/m² to about 10 g/m², more preferably from about 3 g/m² to about 8 g/m², and most preferably from about 5 g/m² to about 6 g/m².

To facilitate the dispersal of the active 16 upon a target surface and to counteract the tendency of the active 16 to remain in a localized distribution pattern, it is preferred to utilize actives 16 that are tailored to be wettable on the target surface. Other methods that can disperse the active 16 upon the target surface include the use of actives 16 having a shear-thinning behavior and providing a lateral mechanical spreading motion to selectively activatable sheet material 10. Lateral mechanical spreading actions can provide additional interactions for a shear-thinning active 16, as well as lathering, foam generation, scrubbing, and abrasive actions.

As shown in FIG. 2a, a selectively activatable sheet material 10 can also comprise a second active 17. The second active 17 can supplement, complement, or augment the properties of the active 16, or perform an entirely different function than active 16. The second active 17 can comprise a plurality of actives and can provide different properties than the active 16. The second active 17 can comprise an adhesive blocking material, reducing the adhesion provided by active 16. Alternatively as shown in FIG. 2b, the second active 17 can comprise an encapsulated adhesive. An encapsulated adhesive can rupture when pressure is applied to selectively activatable sheet material 10 against a target surface. Rupture of an encapsulated adhesive can provide additional adhesion of the selectively activatable sheet material 10 to a target surface. In any regard, a second active 17 can simultaneously increase or decrease the amount of adhesion provided by the active 16.

Exemplary but non-limiting actives 16 and second actives 17 can include cleansing agents (e.g., soaps and detergents), emollients (e.g., lotions), medicinal agents (e.g., ointments), anti-inflammatory creams, and health and beauty care products (e.g., antiperspirants, deodorants, time-releasable medications, transdermal medications, topically efficacious medications, moisturizers, cosmetics, and fragrances). Other exemplary applications for a selectively activatable sheet material 10 can include applicators for automotive and household products such as lubricants, odor absorbents, food preservatives, colorants, protectants (e.g., oil, waxes, and adhesives), and food oriented applications such as condiments (e.g., mustard and ketchup).

The selectively activatable sheet material 10 described heretofore is particularly well suited for use as a food storage wrap. To this end, the selectively activatable sheet material 10 can be core wound and of indefinite length, as would be known to one of skill in the art. Alternatively, selectively activatable sheet material 10 can comprise discreet sheets that are dispensed individually or in a plurality as needed. Thus, it is preferred that the selectively activatable sheet material 10 have a width of at least about 15 cm, more preferably at least about 20 cm, even more preferably at least about 25 cm, and most preferably at least about 30 cm. The length of selectively activatable sheet material 10 can be proportionate to the width to provide an aspect ratio of less than about 2:1 (in either orientation) if the selectively activatable sheet material 10 is dispensed in a cut-and-stack format. The required aspect ratio can be obtained by selecting the difference between cuts in a core wound product. It is preferred that the selectively activatable sheet material 10 be sanitary, approved for direct food contact, and accommodate a temperature range from refrigeration temperatures to ambient temperatures. In some executions, freezing temperatures to microwave and/or boiling temperatures are preferred, as would be known to one of skill in the art. By way of example, the selectively activatable sheet material 10 of the present invention can be formed into a container such as a bag, box, or a hermetically sealed package around a food item for cooking the food item in a boiling water environment.

### Process

In an exemplary process, the active 16 is generally applied to the first surface of lamina 12. In a non-limiting example, active 16 is applied to lamina 12 by uniformly printing active 16 over the entire surface of lamina 12. Application of active 16 to lamina 12 can be by printing in a pattern, spray coating the entire first surface of lamina 12, spray coating a pattern on the first surface of lamina 12, extrusion of active 16 from a nozzle or multiple nozzles onto lamina 12, by co-extruding active 16 with lamina 12, and by other methods known to one of skill in the art. Exemplary, but non-limiting pattern printing can be achieved, as would be known to one of skill in the art, by such methods as Gravure coating or ink-jet printing.

Deactivator 14 can be prepared by suspending SO₂/TiO₂ particles having an average size ranging from 20nm to 100nm in a water/surfactant solution. Preferably, surfactant is added to prevent deactivator 14 particle agglomeration. The deactivator 14 particles can then be applied onto the surface of the active 16 disposed upon lamina 12. In a non-limiting process, deactivator 14 can be applied on the surface of the active 16 by a spray process using a compressed air-sprayer or applied thereto by any spraying or printing methods as would be known to one of skill in the art. It is also believed that the deactivator 14 particles can be applied electrostatically as either a powder or a solution, provided that the electrical properties are compatible with electrostatic spraying to provide a selectively activatable sheet material 10 having a uniform spacing between deactivator 14 particles, as well as a uniform deactivator 14 particle distribution. In this regard, if a metal grid or pattern is placed immediately behind a substrate (i.e., lamina 12), the particles can be attracted to the substrate and result in a pattern of deactivator 14 particles. It is believed that this can result in a uniform spacing between deactivator 14 particles, as well as a uniform deactivator 14 particle distribution.

In an alternative embodiment, lamina 12 can be provided as an extensible sheet material. Further, the deactivator 14 can comprise essentially continuous coverage of lamina 12 with low basis weight regions that do not expose the active 16 therethrough. Upon extension of the selectively activatable sheet material 10 in tension, the low basis weight regions of the deactivator 14 can then separate or rupture. Separation of the low basis weight regions can then expose the active 16 for application to a target surface. Alternatively, the deactivator 144 can comprise a plurality of regions that are less extensible than lamina 12. Rupture of these regions can then expose the active 16 therethrough. It was surprisingly found that this embodiment could provide an advantage of protecting and concealing the active 16 until the point of use.

In another embodiment of the present invention, both lamina 12 and the deactivator 14 are liquid impermeable. However, at least one of the lamina 12 or the deactivator 14 is vapor permeable in response to an applied force. It was surprisingly found that this embodiment could provide for the delivery of a vaporous active 16, as can be used for menthol or aroma therapy active ingredients.

### Exemplary Embodiment

One side of a Tredegar® 12.5 µm polyethylene (PE) film was provided with a corona treatment, as would be known to one of skill in the art. The surface tension of the PE film was measured with Accudyne® Test Marker Pens available from Diversified Enterprises of Claremont, NH. Each pen is designed for a particular surface tension value (in dynes/cm) and is generally provided as a felt marker having a round felt tip that is approximately 6.25 mm in diameter. In use, the pen cap is removed and the pen tip held against a hard surface until the tip is saturated with test fluid. The marker is then drawn across the surface of the PE film test sample in three passes. Only the final pass is evaluated. If the final ink swath remains wetted out on the test surface, and does not bead up, tear apart, or shrink into a thin line within two seconds, then the surface tension of the film is higher than the marker designation used. If the ink swath does bead up, or shrink into a thin line within two seconds, then the next lower dyne level marker is used. The dyne level of the PE test sample was taken as the level matching the marker for which an ink swath holds without beading up for at least three seconds before de-wetting. The surface tension of each PE film increased in a range from about 34 dynes/cm to 50 dynes/cm due to the corona treatment.

The corona-treated PE film was then spray-coated using a diluted ATO Findley LX7110-02 water-based adhesive. The stock adhesive was diluted 1:1 volumetrically with water before spraying. Three coats of adhesive were sprayed onto each PE film using a Spraying Systems Co. Air Atomizer ¼-J nozzle incorporating a model 2050 stainless steel fluid cap and a model 73320 air cap. The air cap mixes pressurized air (20 psi) with the adhesive solution prior to exiting the nozzle orifice.

The adhesive was then dried for no less than 10 minutes at ambient temperature (21°C) and no greater than 50% humidity. It was found that this process resulted in a 10-20 µm thick, 12 µm average, adhesive layer having approximately 60% area coverage of the PE film as measured by SEM. Based on the above coverage and an adhesive density of approximately 8.65 lb/gal (1,032 kg/m³), the range of adhesive coverage was calculated to be 6.2-12.4 g/m² of adhesive, more preferably 6.2-8 g/m². corresponding to the average adhesive thickness. By calculation, if 50% film coverage is achieved, this could provide 5.1-10.2 g/m² of adhesive, and more typically 5.1-6.12 g/m², applied to a film.

A TiO₂ dispersion having 10 weight-percent of TiO₂ ranging from 100-300 nm number mean diameter and an average 150 nm number mean diameter, in water, was sprayed onto the adhesive with the nozzle combination described *supra.* It was found that the coverage resulted in 2-10 µm thick hemispherical drops ranging from 5-20 µm in diameter at approximately 10% total particle coverage. It was calculated that 0.82-4.1 g/m² of TiO₂ was applied to the adhesive.

### Test Methodology

The following is a general description of the 180-degree peel force test and calculations used to evaluate the performance of the embodiment described *supra* against a container surface or relative to itself.

### General Peel Test Methodology:

1. The product was prepared into sample strips measuring 1.3 inches wide (3.3 cm).
2. Samples strips for the container surface peel test (described *infra*) were 6 inches long (15.24 cm). Samples strips for the active-to-active peel test (described *infra*) were 12 inches long (30.48 cm).
3. Each sample was placed on the target surface (secondary surface, or adhesive-to-adhesive) with a 35 Shore A durometer roller. The roller was translated along the length of the sample at a rate of 2.5-3 inches/sec (6.35-7.62 cm/sec) while attached to a force gauge. A force of 3 lb (13.3 N) was applied across the width of the 1.3-inch (3.3 cm) wide sample strip with the roller.
4. An Imada DPS-11 digital force gauge was used to collect peel values. A PS232C analog output was used to download data to a computer. The WinWedge data acquisition software by Taltech was used to download data to a Microsoft Windows Excel spreadsheet. A sampling rate of 100ms was used for all testing (i.e. a force reading was downloaded to the computer by the software from the force gauge every 100ms during the test). In all instances, the gauge was used in pull mode.
5. For removing samples by peeling, 1 inch (2.54 cm) of each sample was affixed to the hook of the force gauge using a 1-inch (2.54 cm) wide 3M Scotch^{®} masking tape # 235. A strip of tape 1.3 inches long (3.3 cm) was cut and affixed first to the sample so that the length of the tape matched the sample width. Then 0.25 inches (0.64 cm) of the tape was overlapped on the lamina sample. The remainder of the tape was affixed to the pull hook on the force gauge.
6. The sample taped to the force gauge was then peeled back parallel to the length of the sample, by hand. This resulted in each sample being peeled back at 180 degrees from the application direction of the sample to the surface.
7. After the test data was collected, the computer calculated an arithmetic mean of the collected force data for calculation of the total force applied during the entire peel test process. The calculated mean value was then divided by the sample width (1.3 inch (3.3 cm)) to calculate the peel force per unit length for both the container surface peel test and the adhesive-to-adhesive peel test. The computer also calculated the standard deviation of the calculated arithmetic means. The calculated results obtained are presented in Tables 1 and 2, *infra*.

### a. Container surface peel test:

1. A 6-inch (16.24 cm) sample, prepared as described *supra,* was applied to the bottom surface of three container types: Pyrex™, Stainless Steel, and polypropylene as described in Step 3, *supra* at ambient temperature, 70-75 °F (21-24 °C). The polypropylene container was a Flavor Savers 5-cup polypropylene container with lid, by Sterilite^{®}.
2. For each container type, five applied samples were stored at one of either 4°C (40°F), 21-24°C (70-75 °F) (ambient), or 41°C (105°F) for 17-27 hours.
3. Samples were removed from the storage temperature and surface temperatures were allowed to equilibrate to ambient temperature 21-24°C (70-75°F) for no less than 30 minutes and no more than 2 hours before conducting the peel test.
4. The peel test, described *supra,* was then conducted on each sample. Pull rates ranged from 4 inches/sec (10.1 cm/sec) to 17 inches/sec (42.3 cm/sec).

### b. Active-to-active peel test:

1. The adhesive side of each 12-inch (30.48 cm) long sample, prepared as described *supra,* was folded length-wise so that both portions of adhesive coated surfaces were in a face-to-face relationship length-wise. The resulting folded and sealed sample was 6 inches (15.24 cm) long by 1 .3 inches (3.3 cm) wide.
2. A 1 inch (2.54 cm) section of the folded and sealed sample was manually peeled apart to provide two portions: one that could be affixed to a surface using a 1 inch (2.54 cm) wide 3M Scotch^{®} masking tape, model #235, and a free portion. A tape strip 1.3 inches long (3.3 cm) was cut and affixed to the sample so that the cut length matched the 1.3-inch (3.3 cm) sample width. Then 0.25 inches (0.64 cm) of the tape width was contacted to, and overlapped onto the sample with the remainder of the tape width (0.75 inches (1.91 cm)) affixed to a horizontal surface.
3. A second piece of tape having the same dimensions as in step 3 above was affixed to the free portion of the sample as described in step 3 above. The remainder of the second piece of tape was affixed to the pull hook on the force gauge as described *supra.*
4. The peel test, described *supra,* was then conducted on each sample. Pull rates ranged from 1.85 inches/sec (4.7 cm/sec) to 10 inches/sec (25.4 cm/sec).

### c. Container Leak Test:

1. A porcelain coffee mug was filled with 4 fluid ounces (118 ml) of tap water. The cup had a rim pitch diameter of 3.25 inches (826 cm), and a wall thickness of 0.125 inches (0.318 cm). The rim of the cup had a 0.063 inch radius (0.159 cm)
2. A square sample of product, prepared supra, larger than the diameter of the cup, was applied to the entire radius of the rim (i. e. the material was not wrapped down the outer wall of the cup) using a 35 Shore A rubber roller with 3 pounds (13.1N) of force.
3. The cup was inverted so that the side-wall of the cup was 10-15° below horizontal to enable the entrained water to apply a downward pressure against the seal area in accord with its volume 4. A time was recorded for the enclosed water to leak (e. g. breach the seal). The recorded time included the time for water to breach the seal, and the time for the water to completely break the seal and drip from the cup onto a horizontal surface 12 inches (30.48 cm) below the rim of the cup, if any. The maximum duration of the test was 60 seconds. Thus, if no leak occurred within 60 seconds of the initiation of the test, the test sample produced a leak test value of at least about 60 seconds.

**Table 1: Container Surface Peel Test**

| | **Peel Force (Grams / cm) [Grams / inch]** | | |
|---|---|---|---|
| | **Mean** | **Standard Deviation** | **Pull Rates (cm/sec) [inches/sec]** |
| Storage Temperature | Stainless Steel | | |
| 40°F (4,44°C) | 37.0 [94] | 5.5 [14] | 25.4-31.8 [10-12.5] |
| Ambient | 68.5 [174] | 16.9 [43] | 12.7-21.2 [5-8.33] |
| 105°F (40.56°C) | 119.7 [304] | 30.7 [78] | 25.4-31.8 [10-12.5] |
| | Polypropylene | | |
| 40°F (4.44°C) | 13.8 [35] | 5.1 [13] | 25.4-42.3 [10-16.67] |
| Ambient | 18.1 [46] | 7.5 [19] | 21.2-31.8 [8.33-12.5] |
| 105°F (40.56°C) | 22.8 [58] | 11.0 [28] | 21.2 - 31.8 [8.33-12.5 |
| | Pyrex™ | | |
| 40°F (4.44°C ) | 70.1 [178] | 12.6 [32] | 25.4 - 42-3 [10-16.67] |
| Ambient | 71.3 [181] | 24.8 [63] | 18.1 -31.8 [7.14-12.5] |
| 105°F (40.56°C) | 124.0 [315] | 17.3 [44] | 25.4-31.8 [10-12.5] |

**Table 2: Active-to-Active Peel Test**

| | **Peel Force (Grams / cm) [Grams/inch]** | | |
|---|---|---|---|
| **Test Temperature** | **Mean** | **Standard Deviation** | **Pull Rates (cm / sec) [inch/sec]** |
| Ambient | 31.5 [80] | 14.6 [37] | 14.1 - 25.4 [5.56-10] |

None of the samples tested for the container leak test exhibited a leak (breach of the seal) up to 60 seconds. Further, none of the tested samples exhibited visual evidence of a seal failure onset (e. g. the water in the container had not breached the footprint of the seal along its perimeter). Thus, all test samples exhibited a leak test value of at least about 60 seconds.

## Claims

1. A food storage wrap comprising a selectively activatable sheet material, said selectively activatable sheet material comprising:
at least one lamina (12) comprising an essentially continuous network and having opposed first and second faces and a deactivator (14) being an array of at least one particulate deactivator material having opposed first and second faces, wherein the first face of the at least one lamina (12) and the first face of the at least one deactivator (14) are joined in face-to-face relationship; and
an active material (16) disposed between said at least one lamina and said at least one deactivator (14);
wherein said active (16) is disposable beyond the lamina (12) and / or the deactivator (14);
wherein said selectively activatable sheet material is releasably adherable to a target surface in response to the application of an external force to said selectively activatable sheet material; and,
wherein said selectively activatable sheet material has a polypropylene surface peel force value ranging from 8.7 g/cm to 34 g/cm (22 g/inch to 84 g/inch), an active-to-active peel force ranging from 17 g/cm to 46 g/cm (43 g/inch to 117 g/inch), and a leak test value of at least 60 seconds, wherein the peel force and leak test values are determined according to the methods set out in the description.

2. The food storage wrap according to claim 1, wherein said active material (16) comprises an essentially continuous network.

3. The food storage wrap according to claim is, wherein said active material (16) comprises an essentially discontinuous network.

4. The food storage wrap according to claim 1, wherein said deactivator (14) is substantially thinner than said active material.

5. The food storage wrap according to claim 1, wherein said deactivator (14) is substantially thicker than said active material.

6. The food storage wrap according to claim 1, wherein said active material (16) is encapsulated.

7. The food storage wrap according to any one of claims 1 to 6, wherein said sheet material comprises a second active material.

8. The food storage wrap according to claim 7, wherein said second active material is selected from the group consisting of cleansing agents, emollients, medicinal agents, anti-inflammatory creams, and health and beauty care products, automotive products, household products, lubricants, odor absorbents, food preservatives, colorants, protectants, food oriented applications, condiments, and combinations thereof.

9. The food storage wrap according to any one of claims i to 6, comprising at least two active materials, wherein each of said at least two active materials are capable of acting upon said target surface in response to said application of external force to said selectively activatable sheet material.

10. The food storage wrap of claim 9, wherein said at least two active materials act upon said target surface simultaneously.

11. The food storage wrap according to claim 9 or claim 10, wherein at least one of said two active materials is an adhesive.

12. The food storage wrap according to any one of claims 1 to 11, wherein said food storage wrap is formed into a container.

13. A process for making a selectively activatable sheet material comprising the steps of:
(a) providing a first substrate having a first face;
(b) disposing an active upon said first face of said first substrate;
(c) applying a particulate deactivator material in an array upon said active disposed upon said first face of said first substrate; and,
wherein said active is disposable beyond said deactivator material in response to an application of an external force to said selectively activatable sheet material; and,
wherein said selectively activatable sheet material has a polypropylene container peel force value ranging from 8.7 g/cm to 34 g/cm (22 g/inch to 84 g/inch), an active-to-active peel force ranging from 17 g/cm to 46 g/cm (43 g/inch to 117 g/inch) and a leak test value of at least 60 seconds, wherein the peel force and leak test values are determined according to the methods set out in the description.

## Patentansprüche

1. Verpackung zur Nahrungsmittelaufbewahrung, umfassend ein selektiv aktivierbares Folienmaterial, wobei das selektiv aktivierbare Folienmaterial Folgendes umfasst:
mindestens eine Schicht (12), die ein im Wesentlichen kontinuierliches Netzwerk umfasst und entgegengesetzte erste und zweite Flächen aufweist, und einen Deaktivator (14), der eine Anordnung von mindestens einem teilchenförmigen Deaktivatormaterial mit entgegengesetzten ersten und zweiten Flächen ist, wobei die erste Fläche der mindestens einen Schicht (12) und die erste Fläche des mindestens einen Deaktivators (14) in einer Fläche-an-Fläche-Beziehung miteinander verbunden sind, und
einen Wirkstoff (16), der zwischen der mindestens einen Schicht und dem mindestens einen Deaktivator (14) angeordnet ist,
wobei der Wirkstoff (16) über die Schicht (12) und/oder den Deaktivator (14) hinaus angeordnet werden kann,
wobei das selektiv aktivierbare Folienmaterial als Reaktion auf die Ausübung einer externen Kraft auf das selektiv aktivierbare Folienmaterial ablösbar an einer Zieloberfläche angehaftet werden kann, und
wobei das selektiv aktivierbare Folienmaterial einen Schälkraftwert bei Polypropylenoberflächen im Bereich von 8,7 g/cm bis 34 g/cm (22 g/Zoll bis 84 g/Zoll),
eine Wirkstoff-an-Wirkstofi-Schälkraft im Bereich von 17 g/cm bis 46 g/cm (43 g/Zoll bis 117 g/Zoll) und einen Undichtigkeitsprüfungswert von mindestens 60 Sekunden aufweist, wobei die Schälkraft- und Undichtigkeitsprüfungswerte nach den in der Beschreibung dargelegten Verfahren ermittelt werden.

2. Verpackung zur Nahrungsmittelaufbewahrung nach Anspruch 1, wobei der Wirkstoff (16) ein im Wesentlichen kontinuierliches Netzwerk umfasst.

3. Verpackung zur Nahrungsmittelaufbewahrung nach Anspruch 1, wobei der Wirkstoff (16) ein im Wesentlichen diskontinuierliches Netzwerk umfasst.

4. Verpackung zur Nahrungsmittelaufbewahrung nach Anspruch 1, wobei der Deaktivator (14) im Wesentlichen dünner ist als der Wirkstoff.

5. Verpackung zur Nahrungsmittelaufbewahrung nach Anspruch 1, wobei der Deaktivator (14) im Wesentlichen dicker ist als der Wirkstoff.

6. Verpackung zur Nahrungsmittelaufbewahrung nach Anspruch 1, wobei der Wirkstoff (16) eingekapselt ist.

7. Verpackung zur Nahrungsmittelaufbewahrung nach einem der Ansprüche 1 bis 6, wobei das Folienmaterial einen zweiten Wirkstoff umfasst.

8. Verpackung zur Nahrungsmittelaufbewahrung nach Anspruch 7, wobei der zweite Wirkstoff ausgewählt ist aus der Gruppe bestehend aus Reinigungsmitteln, Weichmachern, Arzneimitteln, entzündungshemmenden Cremes und Gesundheits- und Schönheitspflegeprodukten, Automobilprodukten, Haushaltsprodukten, Gleitmitteln, Geruchsabsorptionsmitteln, Nahrungskonservierungsmitteln, Farbstoffen, Schutzmitteln, nahrungsmittelbezogenen Anwendungen, Gewürzen und Kombinationen davon.

9. Verpackung zur Nahrungsmittelaufbewahrung nach einem der Ansprüche 1 bis 6, umfassend mindestens zwei Wirkstoffe, wobei jeder der mindestens zwei Wirkstoffe in der Lage ist, als Reaktion auf die Ausübung einer externen Kraft auf das selektiv aktivierbare Folienmaterial auf die Zieloberfläche zu wirken.

10. Verpackung zur Nahrungsmittelaufbewahrung nach Anspruch 9, wobei die mindestens zwei Wirkstoffe gleichzeitig auf die Zieloberfläche wirken.

11. Verpackung zur Nahrungsmittelaufbewahrung nach Anspruch 9 oder Anspruch 10, wobei mindestens einer der beiden Wirkstoffe ein Haftmittel ist.

12. Verpackung zur Nahrungsmittelaufbewahrung nach einem der Ansprüche 1 bis 11, wobei die Verpackung zur Nahrungsmittelaufbewahrung zu einem Behälter geformt ist.

13. Verfahren zur Herstellung eines selektiv aktivierbaren Folienmaterials, umfassend die folgenden Schritte:
(a) Bereitstellen eines ersten Trägermaterials mit einer ersten Fläche,
(b) Anordnen eines Wirkstoffs auf der ersten Fläche des ersten Trägermaterials,
(c) Aufbringen eines teilchenförmigen Deaktivatormaterials in einer Anordnung auf den Wirkstoff, der auf der ersten Fläche des ersten Trägermaterials angeordnet ist, und
wobei der Wirkstoff als Reaktion auf die Ausübung einer externen Kraft auf das selektiv aktivierbare Folienmaterial über das Deaktivatormaterial hinaus angeordnet werden kann, und
wobei das selektiv aktivierbare Folienmaterial einen Schälkraftwert bei Polypropylenbehältern im Bereich von 8,7 g/cm bis 34 g/cm (22 g/Zoll bis 84 g/Zoll), eine Wirkstoff-an-Wirkstoff-Schälkraft im Bereich von 17 g/cm bis 46 g/cm (43 g/Zoll bis 117 g/Zoll) und einen Undichtigkeitsprüfungswert von mindestens 60 Sekunden aufweist, wobei die Schälkraft- und Undichtigkeitsprüfungswerte nach den in der Beschreibung dargelegten Verfahren ermittelt werden.

## Revendications

1. Emballage de stockage alimentaire comprenant un matériau en feuille pouvant être activé sélectivement, ledit matériau en feuille pouvant être activé sélectivement comprenant :
au moins une partie laminaire (12) comprenant un réseau pratiquement continu et ayant des première et deuxième faces opposées et un désactivateur (14) qui est un réseau d'au moins un matériau désactivateur particulaire ayant des première et deuxième faces opposées, dans lequel la première face de l'au moins une partie laminaire (12) et la première face de l'au moins un désactivateur (14) sont jointes dans une relation face à face ; et
un matériau actif (16) disposé entre ladite au moins une partie laminaire et ledit au moins un matériau désactivateur (14) ;
dans lequel ledit matériau actif (16) peut être disposé au-delà de la partie laminaire (12) et / ou du désactivateur (14) ;
dans lequel ledit matériau en feuille pouvant être activé sélectivement peut être mis en adhésion de manière libérable sur une surface cible en réponse à l'application d'une force externe audit matériau en feuille pouvant être activé sélectivement ; et,
dans lequel ledit matériau en feuille pouvant être activé sélectivement a une force de pelage sur une surface en polypropylène allant de 8,7 g/cm à 34 g/cm (22 g/pouce à 84 g/pouce), une force de pelage de matériau actif sur matériau actif allant de 17 g/cm à 46 g/cm (43 g/pouce à 117 g/pouce), et une valeur de test de fuite d'au moins 60 secondes, dans lequel les valeurs de force de pelage et de test de fuite sont déterminées selon les procédés présentés dans la description.

2. Emballage de stockage alimentaire selon la revendication 1, dans lequel ledit matériau actif (16) comprend un réseau pratiquement continu.

3. Emballage de stockage alimentaire selon la revendication 1, dans lequel ledit matériau actif (16) comprend un réseau pratiquement discontinu.

4. Emballage de stockage alimentaire selon la revendication 1, dans lequel ledit désactivateur (14) est essentiellement plus mince que ledit matériau actif.

5. Emballage de stockage alimentaire selon la revendication 1, dans lequel ledit désactivateur (14) est essentiellement plus épais que ledit matériau actif.

6. Emballage de stockage alimentaire selon la revendication 1, dans lequel ledit matériau actif (16) est encapsulé.

7. Emballage de stockage alimentaire selon l'une quelconque des revendications 1 à 6, dans lequel ledit matériau en feuille comprend un deuxième matériau actif.

8. Emballage de stockage alimentaire selon la revendication 7, dans lequel ledit deuxième matériau actif est choisi dans le groupe constitué des agents nettoyage, émollients, agents médicinaux, crèmes anti-inflammatoires, et produits pour la santé et les soins de beauté, produits automobiles, produits ménagers, lubrifiants, absorbants d'odeur, conservateurs alimentaires, colorants, agents protecteurs, applications à orientation alimentaire, condiments, et leurs combinaisons.

9. Emballage de stockage alimentaire selon l'une quelconque des revendications 1 à 6, comprenant au moins deux matériaux actifs, dans lequel chacun desdits au moins deux matériaux actifs est susceptible d'agir sur ladite surface cible en réponse à ladite application d'une force externe sur ledit matériau en feuille pouvant être activé sélectivement.

10. Emballage de stockage alimentaire selon la revendication 9, dans lequel lesdits au moins deux matériaux actifs agissent sur ladite surface cible simultanément.

11. Emballage de stockage alimentaire selon la revendication 9 ou la revendication 10, dans lequel au moins l'un parmi lesdits deux matériaux actifs est un adhésif.

12. Emballage de stockage alimentaire selon l'une quelconque des revendications 1 à 11, dans lequel ledit emballage de stockage alimentaire est formé en un récipient.

13. Procédé de fabrication d'un matériau en feuille pouvant être activé sélectivement comprenant les étapes consistant à :
(a) fournir un premier substrat ayant une première face ;
(b) disposer un matériau actif sur ladite première face dudit premier substrat ;
(c) appliquer un matériau désactivateur particulaire en un réseau sur ledit matériau actif disposé sur ladite première face dudit premier substrat ; et,
dans lequel ledit matériau actif peut être disposé au-delà dudit matériau désactivateur en réponse à l'application d'une force externe sur ledit matériau en feuille pouvant être activé sélectivement ; et,
dans lequel ledit matériau en feuille pouvant être activé sélectivement a une force de pelage sur un récipient en polypropylène allant de 8,7 g/cm à 34 g/cm (22 g/pouce à 84 g/pouce), une force de pelage de matériau actif sur matériau actif allant de 17 g/cm à 46 g/cm (43 g/pouce à 117 g/pouce), et une valeur de test de fuite d'au moins 60 secondes, dans lequel les valeurs de force de pelage et de test de fuite sont déterminées selon les procédés présentés dans la description.
